# EUROPEAN PATENT SPECIFICATION

(11) **EP 3 605 992 B1**
(45) Date of publication and mention of the grant of the patent: **13.03.2024**
(21) Application number: 18187251.6
(22) Date of filing: 03.08.2018
(51) Int. Cl.: H04L 9/40, H04L 9/32, H04W 12/122, G06F 21/44, G06F 9/4401

(54) **REMOTELY CONFIGURING A CUSTOMER PREMISE EQUIPMENT**
FERNKONFIGURATION EINER KUNDENANLAGE
CONFIGURATION DISTANTE D'ÉQUIPEMENTS DÉPLOYÉS CHEZ DES CLIENTS

(43) Date of publication of application: 05.02.2020
(73) Proprietor: Nokia Solutions and Networks Oy, 02610 Espoo (FI)
(72) Inventor: PEYLO, Martin Karl, 02600 Espoo (FI)
(74) Representative: Laine IP Oy

(56) References cited:
- US-A1- 2007 011 301
- US-A1- 2017 039 373
- US-B1- 8 869 236

## Description

### FIELD

The present invention relates to authenticating entities to each other, for example configuration server authentication to a client device.

### BACKGROUND

Customer equipment, for example equipment at customer premises, known as CPE devices, may comprise, for example, a terminal located at a subscriber's premises, such as a home or an office. Examples of CPE devices include telephones, routers, network switches, set-top boxes, residential gateways, internet access gateways and home-networking adapters. When a CPE device is taken into use, it may be provided with configuration data, to enable its correct functioning for the subscriber.

A CPE device may be provided configuration data from a configuration server, for example. As the CPE device is switched on, it may connect to a pre-configured configuration server, receive the configuration data and take the configuration data into use by applying it. Configuration data may comprise network settings or authentication credentials, for example.

Document US2017/039373A1 discloses bootstrapping without transferring a private key. A bootstrap request from a remote device comprises an address of the remote device, and a bootstrap server provides a certificate to the remote device. Document US2007011301A1 discloses a provisioning relay and re-direction server for service implementation on generic customer premises equipment. Resources therein may be accesses with URIs. US8869236B1 discloses automatic configuration of a network device, wherein configuration data is provided to a network device responsive to a request for the configuration data from the network device.

### SUMMARY OF THE INVENTION

The invention is set out in the appended set of independent claims. Further advantageous aspects are disclosed within the dependent claims.

### BRIEF DESCRIPTION OF THE DRAWINGS

FIGURE 1 illustrates an example system in accordance with at least some embodiments of the present invention;
FIGURE 2 illustrates an example system in accordance with at least some embodiments of the present invention;
FIGURE 3 illustrates an example apparatus capable of supporting at least some embodiments of the present invention;
FIGURE 4 illustrates signalling in accordance with at least some embodiments of the present invention;
FIGURE 5 is a flow graph of a method in accordance with at least some embodiments of the present invention, and
FIGURE 6 is a flow graph of a method in accordance with at least some embodiments of the present invention.

### EMBODIMENTS

Security may be increased in use cases where performing CPE device configuration is delegated from a higher-level configuration entity to subordinate configuration servers, such that a CPE device may contact a subordinate configuration server using an address, or other resource locator, which comprises an identifier of the CPE device itself. Thus, a higher-level service provider may offer network services, such as cellular communication network services, for example, to customers such that the customers may operate their local configuration servers, for example. Risks of man-in-the-middle attacks aiming to, for example, integrate CPE devices into botnets may be, at least partly, controlled, yielding a benefit and technical effect in terms of security.

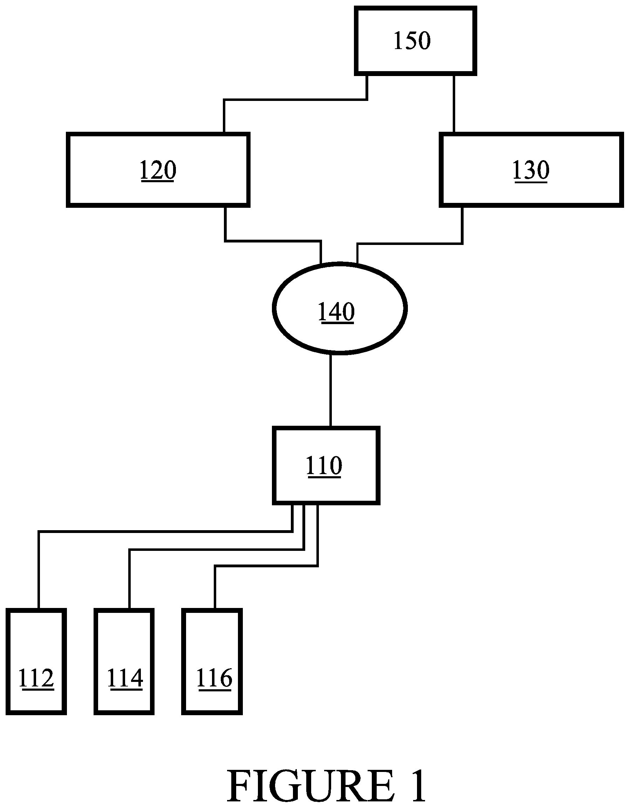

FIGURE 1 illustrates an example system in accordance with at least some embodiments of the present invention. FIGURE 1 illustrates CPE device 110, which may comprise, for example, a telephone, a router, a network switch, a set-top box, a residential gateway, an internet access gateway, a home-networking adapter or, for example, a base station of a cellular communications network. Such a base station may be known as an eNB or gNB, for example, depending on the cellular technology in question.

CPE device 110 provides, in the illustrated example, connectivity to units 112, 114 and 116. These units may comprise, depending on the embodiment, cellular telephones, computers, tablet devices, Internet of Things devices or office printers, for example. The connectivity between CPE device 110 and units 112, 114 and 116 may be wire-line or at least in part wireless, in dependence of the embodiment and the technology used therein.

CPE device 110 is connected via network 140 to further nodes. Network 140 may comprise a local network, such as a wireless local area network, WLAN, a wire-line network such as an interconnection network of a cellular radio access network, or network 140 may be comprised as part of the Internet. The nature of network 140 depends on the specific embodiment. For example, where CPE device 110 is a cellular base station, network 140 may be the interconnection network of a cellular radio access network. In such embodiments, the certificate management protocol, CMP, in accordance with RFC 4210 may be are relevant technical context. On the other hand, where CPE device 110 comprises a home gateway, network 140 may comprise a fibre-optic network of an internet service provider, ISP. Open Mobile Alliance, OMA, lightweight machine to machine, OMA LwM2M, is another possible technical context for at least some embodiments of the present invention. Another possible technical context is TR-069, published by the Broadband Forum. In general, the CPE device is an example of a client device. A client device may comprise a CPE device, an LwM2M device or a cellular base station, for example.

Configuration server 120, which may comprise, for example, an auto-configuration server in the sense of TR-069, an LwM2M bootstrap server or a registration authority. Configuration server 120 may be delegated authority to configure some CPE devices, and configuration server 130 may be delegated authority to configure other CPE devices. Higher-level service provider server 150 may delegate the configuration authority to configuration servers concerning sets of CPE devices, such as configuration server 120 and configuration server 130. There may be a larger number of configuration servers which have been delegated authority to configure CPE devices, two are merely illustrated in FIGURE 1 for the sake of clarity and conveying concepts related to the present disclosure.

In systems where only one configuration server is used, CPE devices may be pre-configured with a trust anchor, such as a root certificate, which enables the CPE device to validate other certificates of the relevant PKI hierarchy. A CPE device may be pre-configured with a uniform resource locator, URL, of the configuration server or, for example, the CPE device may obtain the URL of the configuration server from a dynamic host configuration protocol, DHCP, server. Authenticating the configuration server by means of the presented server certificate relies on the URL of the configuration server being correct, since the host portion of the URL determines whether the authentication succeeds.

Once the configuration server is contacted and authenticated, it may configure the CPE device. Setting network parameters may be comprised in the configuration, for example. The network parameters may comprise, for example, network address translation parameters, a gateway address and/or traffic filters. Another example for configuration may be authentication credentials, used by the CPE device to authenticate itself to other entities, or additional trust anchors used to authenticate other entities. In principle, the configuration server may even replace the firmware of the CPE device with new firmware, for example to perform a software update. However, this is of great interest to attackers who could infect the CPE devices with malware to include the CPE devices in botnets, for example. The well-known Mirai botnet is an example which infected thousands of devices.

In case the system comprises plural delegated configuration servers, the CPE devices need to contact the correct configuration servers to receive their configuration data therefrom. A risk is present, where a delegated configuration server not assigned to configure a specific CPE device would attempt a man-in-the-middle, MITM, attack on a connection between the CPE device and the correct delegated configuration server. Using the attack, the incorrect configuration server could replace the correct configuration data of the CPE device with fraudulent configuration data, which, as noted above, may even comprise a firmware update. This would give the wrong configuration server, and parties operating that server, complete control of the CPE device. As the various configuration servers may be operated by different stakeholders, this presents a risk which needs to be addressed. To guard against this, it would be useful to increase confidence in the identifier, for example URL, the CPE device associates with the delegated configuration server, and for which the server authenticates. This authenticated configuration server identifier might be, for example, the used configuration server's FQDN when TLS is used, or the registration authority, RA, subject name used as sender when CMP, in accordance with RFC 4210, is used.

Elements of configuration data to be provided from the delegated configuration server to CPE device 110 may comprise a cryptographic certificate of the CPE device and the associated private key. In general, a cryptographic certificate may be associated with exactly one private key, which is a private key of a key pair, the other key in the key pair being the public key which may be comprised in the certificate. As will be described herein, these may be leveraged to authenticate the configuration server to the CPE device. The certificate may comprise, for example, an X.509 certificate or more generally a public key certificate. The configuration data may comprise authentication credentials.

CPE device 110 may obtain its individual configuration server URL from its own memory in case the URL is pre-configured into CPE device. Alternatively, CPE device may obtain the URL of the configuration server from a DHCP server. The CPE devices 110's may be shipped with generic configuration in regard to the configuration server URL, distinguished to each other by having their unique CPE device identifiers.

The CPE device then uses its unique identifier, such as, for example, a serial number, to compile an initial message for transmission to the configuration server. For example, for leveraging commodity TLS client implementation features and APIs, the initial message is addressed to the configuration server using an resource locator which includes the identifier of the CPE device, for example in the fully qualified domain name, FQDN, part of an URL where the resource locator is a URL. Thus, the URL may be, for example, "cpe#.config1.nokia.com", where cpe# is the unique CPE device identifier, such as serial number. The URL of the configuration server may be available to CPE device 110 in a form which already includes the identifier of the CPE device, whether it is pre-provisioned or obtained from DHCP. However, CPE device 110 should nonetheless check, if using the DHCP server, that the URL comprises the correct CPE identifier before using it, to protect against malicious DHCP messages attempting to guide the CPE device to contact an incorrect configuration server. In some embodiments, the DHCP only provides the part of the configuration server URL which excludes the CPE device identifier, with the CPE devices being configured to modify these by adding their identifiers.

Configuration server 120 may be informed of the CPE device-specific configuration server resource locator by including it in the initial message, for example where the initial message is a TLS message, in a server name indication, SNI, extension. Where TLS/URL is not used, another suitable resource locator and protocol field may be used, for example in case of CMP in accordance with RFC 4210 the "recipient" field indicating a CPE device-specific distinguished name of the addressed registration authority, RA, may include the unique CPE device identifier.

The same CPE identifier may likewise be embedded in the cryptographic certificate to be provisioned to the CPE device, in a form suitable for the used protocol, matching the configuration server identifier to be authenticated. The CPE identifier may be embedded in the certificate in a Subject Name or Subject Alternative Name field, for example. The correct configuration server either has this certificate to begin with, or is enabled to obtain it in response to being contacted by the CPE device.

A transport layer security, TLS, connection may be formed between CPE device 110 and the correct configuration server, which may be configuration server 120 in terms of FIGURE 1, for example. The TLS connection is successfully established only in case the configuration server has the CPE-specific cryptographic certificate and the associated private key. Alternatively to a TLS connection, another protocol may be used which uses public key certificates and provides means for the server side to utilize a resource locator which can comprise an unique CPE device identifier.

The TLS connection set-up comprises the configuration server participating in an authentication process based on the certificate to the CPE device. This process may comprise the server providing the certificate of the CPE device. The certificate comprises a public key and the certificate overall is signed by a certificate authority, CA. CPE device 110 may verify the signature on the certificate and the relevant certificate chain using its trust anchor. A trust anchor may comprise a certificate of a certificate authority comprising a public key of the certificate authority, which enables verifying cryptographic signatures made using the corresponding private key of the certificate authority. The CPE device identifier, being in the certificate, is covered by and therefore verified by means of the cryptographic signature of the CA.

CPE device 110 may, responsive to the certificate being successfully verified, utilize further cryptographic processes, based on the trust in the verified certificate and the associated private key, to establish trust in communication originating from the configuration server 120. For example, a TLS handshake may take place. Not having the private key corresponding to the certificate with the CPE identifier, a MITM attacker node disposed on a communication route between CPE device 110 and configuration server 120 is excluded from the communication, since it cannot meaningfully modify the communication between CPE device 110 and configuration server 120.

This is suitable to mitigate the risk that operators of one delegate configuration server misuse a cryptographic certificate specific to their configuration server to attack CPE devices destined to obtain their initial configuration from a delegated configuration server of another stakeholder. The configuration data, including private key, may be provided to CPE device 110 via the secured TLS connection, or utilizing other suitable secure protocols. In some embodiments, configuration comprises binding the CPE device to the same configuration server for future updates of the configuration data. In some embodiments, a new trust anchor may be provided to CPE device 110 to supplement or replace the trust anchor furnished in the CPE device at manufacture. Alternatively to using the cryptographic certificate of CPE device 110 in authenticating configuration server 120, another client-specific certificate may be employed in authenticating configuration server 120, for example where the public/private key pair of CPE device 110 is generated on the CPE device, and the private key is consequently not known to the configuration server 120. To use the CPE device certificate itself in authentication, the configuration server would also need to know the associated private key.

In general, a CPE device may have more than one cryptographic certificate, such as an X.509 certificate, for different uses such as S1 interface encryption, local/remote management terminal authentication, LwM2M client authentication, and TR-069 CPE TLS client authentication. In general, the configuration server may be configured to authenticate a CPE device before participating in a configuration session with it. Such authentication may be based on a username/password or other reference/secret combination, for example.

In some embodiments, CPE device 110 is configured to resolve the configuration server URL by means of the domain name system, DNS. A domain name server may be configured to return the same internet protocol address to all URLs with the same domain name excluding the CPE device identifier, that is, the DNS system may ignore the CPS identifier part of the FQDN when resolving the domain names of the configuration servers. Alternatively, the DNS may consult a database, in case a part of CPEs should be directed to one configuration server and another part to another configuration server, depending on the CPE identifiers.

Configuration server 120 may, as noted above, have the certificate for a CPE device 110 before it is contacted by the CPE device 110. In this case, higher-level service provider server 150 may pre-provision delegated configuration servers 120, 130 with certificates of CPE devices which they are to configure. Alternatively, configuration server 120 may be configured to request the certificate of CPE 110 from higher-level service provider server 150 as a response to receiving the initial message from CPE 110. In some embodiments, server 150 requests a CA to generate the CPE certificate responsive to receiving a request from configuration server 120 for the certificate.

Configuration server 120 may request the certificate using the CPE identifier in the query to server 150, for example. Responsive to the request from configuration server 120, server 150 may provide the certificate of CPE device 110 to configuration server 120. CPE device 110 keys, a private key and a corresponding public key, may be generated either in configuration server 120 or in server 150. Server 150 may delete the private key of CPE device 110 after providing the keys to configuration server 120, in embodiments where server 150 generates the keys. Likewise, configuration server 120 may delete the private key of CPE device 110, after providing it to CPE device 110.

Various advantages may be obtained using the herein disclosed solutions, including secure initial bootstrap of CPE devices in a delegated configuration server environment with multiple stakeholders. Mitigating against man-in-the-middle attacks becomes possible without using a complicated supply chain. Enabling multiple delegated configuration servers in control of multiple third parties, also operating partially offline, which enables new use cases, for example for IoT/M2M, smart home, and includes a high degree of fault tolerance. The fault tolerance is enabled by linking to higher-level server 150 not needing to be permanently available.

Furthermore, a physical supply chain may be simplified, CPEs for all individual target configuration server-environments may be produced in a unified way. This simplifies production as well as supply chain logistics. A more traditional security method would require that CPEs are tailored to the configuration server by supplying them with configuration server-specific trust anchors, or hard-coded configuration server URLs fitting to their target environment.

CPE devices may be securely and dynamically allocated to their target-delegated configuration server environment. Allocation can be done, for example, via web interfaces to the overall system. Allocation could be triggered, for example, by field engineers taking a random device from stock, or by end-customers who have purchased random devices in retail.

Cost savings in multi-stakeholder scenarios may be obtained, by being able to use only one single X.509 certificate and associated private key for securely authenticating the configuration server to the CPE device, and then for being supplied to the CPE device for serving future use cases.

A larger number of created certificates in a public key infrastructure, PKI usually increases the effort and cost for document creation and maintenance, certificate storage, audits and revocation. Therefore, using a single certificate decreases the needed effort.

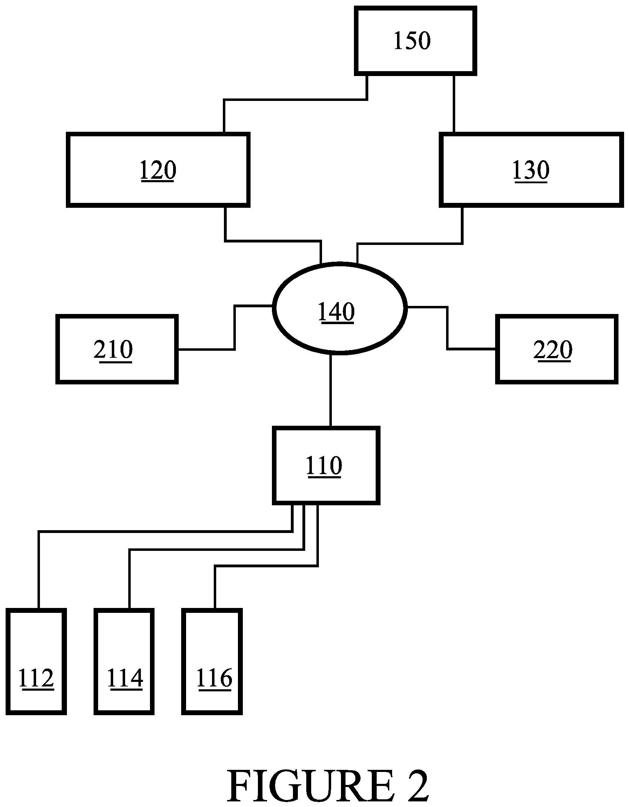

FIGURE 2 illustrates an example system in accordance with at least some embodiments of the present invention. The system of FIGURE 2 resembles that of FIGURE 1, and indeed like numbering denotes like structure. The system of FIGURE 2 further comprises a DHCP server 210, from which CPE device 110 may query the URL of configuration server 120, or part of it, as described herein above. Further, the system of FIGURE 2 comprises DNS server 220, where CPE device 110 may resolve the URL of configuration server 120, this URL comprising the CPE device identifier, as also described herein above. Although illustrated as being interfaced with the same network, in various embodiments DHCP server 210 and/or DNS server 220 may be accessible via different networks as well, for example, where network 140 is a local network, the DNS server 220 may be disposed in the public Internet, which, in turn, may be reachable via network 140.

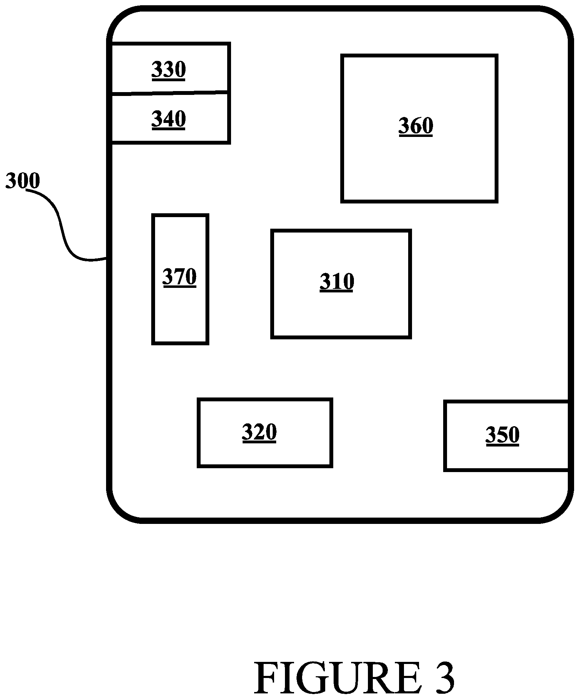

FIGURE 3 illustrates an example apparatus capable of supporting at least some embodiments of the present invention. Illustrated is device 300, which may comprise, for example, in applicable parts, a device such as CPE device 110 or configuration server 120 of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure network settings or initiate a firmware update.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise, processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

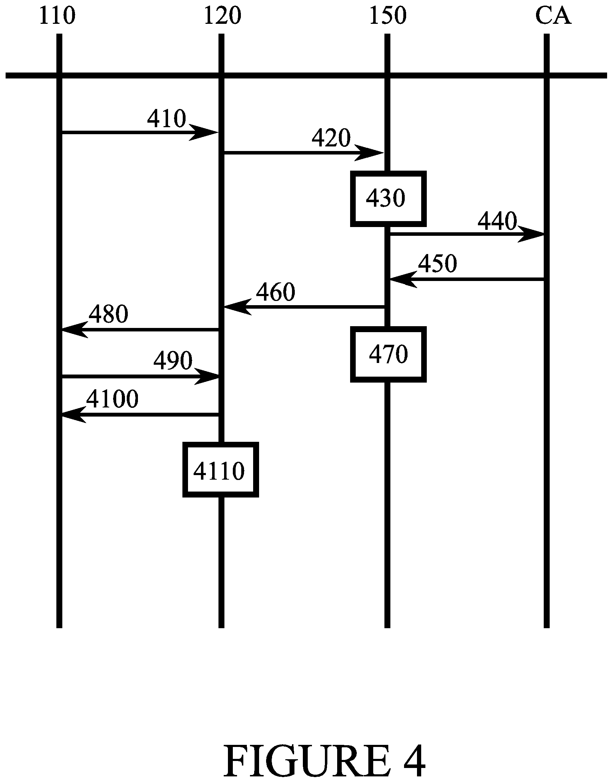

FIGURE 4 illustrates signalling in accordance with at least some embodiments of the present invention. On the vertical axes are disposed, from the left, CPE device 110, configuration server 120, server 150 and on the right, a certificate authority CA. Time advances from the top toward the bottom.

In phase 410, CPE device 110 transmits the initial message to configuration server 120, comprising the unique CPE device identifier, as described herein above. The initial message may comprise a TLS "Client Hello" message, initializing the TLS handshake, for example. Responsive to the initial message, configuration server 120 requests the CPE device-specific certificate from server 150. The request is illustrated in FIGURE 4 as phase 420. In embodiments where configuration server 120 is pre-provisioned with these certificates, phases 420 to 460 may be absent.

In phase 430, server 150 generates the CPE device keys, comprising a public key - private key pair in accordance with public key cryptography and, for example, the RSA or ElGamal cryptosystem. The keys may be generated in configuration server 120 alternatively to server 150. In the illustrated embodiment, server 150 does not store the CPE-specific certificates, wherefore server 150 requests a certificate for CPE device 110 from certificate authority CA, phase 440. Certificate authority CA responsively provides a certificate in phase 450. The CPE device-specific identifier, such as serial number, may be provided in phases 410, 420 and 440, wherefore certificate authority CA may include it in the certificate it generates and signs. In embodiments of the invention where server 150 stores pre-generated certificates, phases 440 and 450 may be absent.

In phase 460, server 150 may provide the CPE-specific certificate, the generated keys and configuration data to configuration server 120. Once the keys are provided, they may be locally deleted from server 150, in phase 470. Of course, if configuration server 120 is pre-provisioned with the CPE device-specific certificate, the generated keys and configuration data, then it need not involve server 150 and phases 420, 430, 440, 450, 460 and 470 may be absent. In some embodiments, configuration server 120 is pre-provisioned with the CPE device-specific certificate, and the configuration data, and is further configured to dynamically generate the CPE device keys as a response to the initial message of phase 410.

In phase 480, configuration server 120 responds to CPE device 110 by transmitting the certificate to CPE device 110 for the purpose of authenticating the configuration server 120 towards the CPE device 110. CPE device 110 responsively checks that its unique identifier is correctly embedded in the certificate and verifies that the cryptographic signature of the certificate is correct. CPE device 110 may further verify that a signature was generated by the configuration server using the private key associated with presented certificate. In phase 490, the CPE device may confirm successful establishment of the security association, may provide cryptographic tokens like shared secrets to the server, and may also explicitly request provisioning configuration data. In phase 4100, or already earlier in phase 480 if possible in utilized protocols, configuration data may be provided over the established connection, which is secured directly or indirectly with CPE device-specific certificate and the associated private key. Once the CPE configuration has been provided to CPE device 110, configuration server 120 may delete the private key associated with the CPE device-specific certificate, in phase 4110.

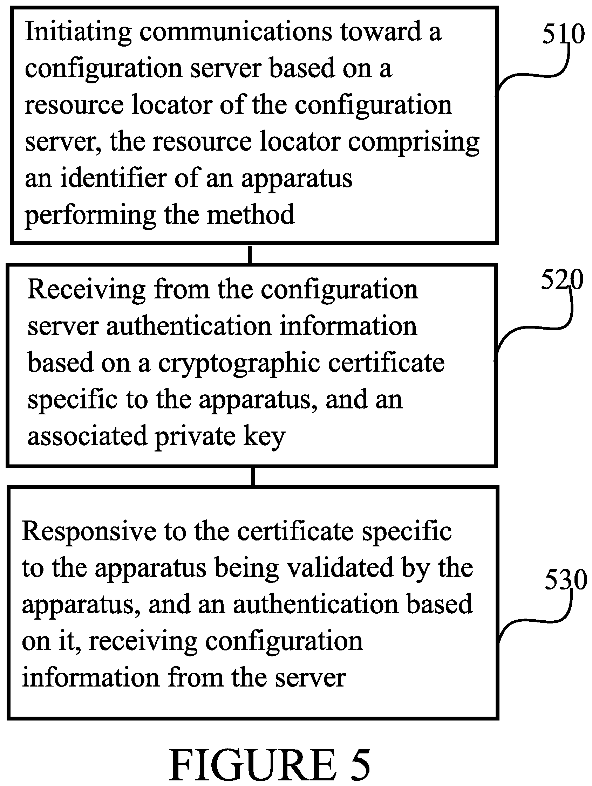

FIGURE 5 is a flow graph of a method in accordance with at least some embodiments of the present invention. The phases of the illustrated method may be performed in CPE device 110, or in a control device configured to control the functioning thereof, when installed therein.

Phase 510 comprises initiating communications toward a configuration server based on a resource locator of the configuration server, the resource locator comprising an identifier of an apparatus performing the method. Phase 520 comprises receiving from the configuration server authentication information based on cryptographic certificate specific to the apparatus, and an associated private key. This may be, for example, for authenticating the configuration server, and a form of signature, depended on the used protocol, created using the private key associated to the certificate. The authentication information may comprise the cryptographic certificate specific to the apparatus, or a link to a location where this certificate may be obtained from. The cryptographic certificate specific to the apparatus may comprise the identifier of the apparatus performing the method. The associated private key may be associated with the certificate. Phase 530 comprises, responsive to the certificate specific to the apparatus being validated by the apparatus, and an authentication based on the certificate, receiving configuration data from the configuration server. The configuration data may include the cryptographic certificate specific to the apparatus, which the apparatus may use for authenticating itself towards other entities. The resource locator may comprise, for example, a universal resource locator, URL. Alternatively, the resource locator may comprise a recipient name in accordance with CMP, as described herein above.

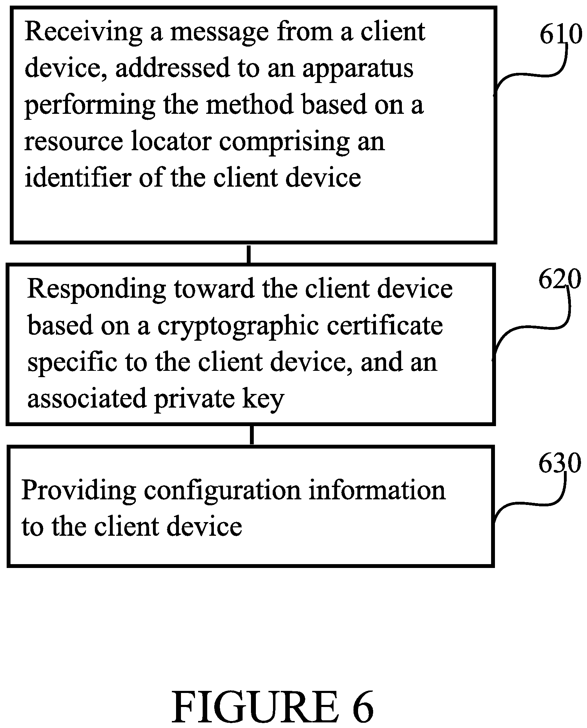

FIGURE 6 is a flow graph of a method in accordance with at least some embodiments of the present invention. The phases of the illustrated method may be performed in configuration server 120, or in a control device configured to control the functioning thereof, when installed therein.

Phase 610 comprises receiving a message from a client device, addressed to an apparatus performing the method based on a resource locator of the apparatus, the resource locator comprising an identifier of the client device. Phase 620 comprises responding toward the client device, based on a cryptographic certificate specific to the client device. Finally, phase 630 comprises providing configuration data to the client device. The configuration data may be provided responsive to the client device accepting the server's response. The configuration server may comprise an auto-configuration server, for example.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in secure equipment configuration.

### ACRONYMS LIST

- ACS: Auto-configuration server
- CA: Certificate authority
- CMP: Certificate management protocol
- CPE: Customer premises equipment
- DHCP: Dynamic host configuration protocol
- FQDN: Fully qualified domain name
- LwM2M: Lightweight machine to machine
- MITM: man-in-the-middle attack
- OMA: Open mobile alliance
- PKI: Public key infrastructure
- RA: Registration authority
- RFC: Request for comments
- TR-069: Technical report 069
- SNI: Server name indication
- TLS: Transport layer security
- URL: Uniform resource locator
- WLAN: wireless local area network

### REFERENCE SIGNS LIST

| | |
|---|---|
| 110 | CPE device |
| 120, 130 | Configuration server |
| 140 | Network |
| 150 | Higher-level service provider server |
| 112, 114, 116 | Units |
| 210 | DHCP server |
| 220 | DNS server |
| 300 - 370 | Structure of the device of FIGURE 3 |
| 410-4110 | Phases of FIGURE 4 |
| 510 - 530 | Phases of FIGURE 5 |
| 610-630 | Phases of FIGURE 6 |

## Claims

1. An apparatus (300) comprising at least one processing core (310), at least one memory (320) including computer program code, the at least one memory (320) and the computer program code being configured to, with the at least one processing core (310), cause the apparatus (300) at least to:
- initiate (510) communications toward a configuration server based on a resource locator of the configuration server, the resource locator comprising an identifier of the apparatus;
- receive (520) from the configuration server authentication information based on a cryptographic certificate specific to the apparatus, and receive from the configuration server a private key associated with the cryptographic certificate, and
- responsive to the certificate specific to the apparatus being validated by the apparatus, and an authentication of the configuration server based on it, receive (530) configuration data from the configuration server, the validation comprising checking that the identifier of the apparatus is embedded in the cryptographic certificate and that a cryptographic signature of the cryptographic certificate is correct.

2. The apparatus (300) according to claim 1, wherein the at least one memory (320) and the computer program code are further configured to, with the at least one processing core (310), cause the apparatus (300) to obtain at least part of the resource locator of the configuration server from a dynamic host configuration server by querying the dynamic host configuration server.

3. The apparatus (300) according to any of claims 1-2, wherein the resource locator of the configuration server is a universal resource locator and the identifier of the apparatus is comprised in a fully qualified domain name part of the universal resource locator of the configuration server.

4. The apparatus (300) according to any of claims 1 - 3, wherein the at least one memory and the computer program code are configured to, with the at least one processing core, cause the apparatus (300) to validate the certificate specific to the apparatus with reference to a trust anchor stored in the apparatus (300).

5. The apparatus (300) according to any of claims 1-4, wherein the at least one memory (320) and the computer program code are configured to, with the at least one processing core(310), cause the apparatus (300) to initiate (510) the communications toward the configuration server in accordance with a transport layer security, TLS, protocol.

6. An apparatus (300) comprising at least one processing core, at least one memory (320) including computer program code, the at least one memory (320) and the computer program code being configured to, with the at least one processing core (310), cause the apparatus (300) at least to:
- receive (610) a message from a client device, addressed to the apparatus based on a resource locator of the apparatus, and
- respond (620) toward the client device by transmitting to the client device a cryptographic certificate specific to the client device,
**characterized in that**
- the resource locator comprises an identifier of the client device, **in that** the responding comprises transmitting to the client device a private key associated with the cryptographic certificate, the identifier of the client device being embedded in said cryptographic certificate, and **in that** the apparatus is configured to provide (630) configuration data to the client device.

7. The apparatus (300) according to claim 6, wherein the at least one memory (320) and the computer program code are further configured to, with the at least one processing core (310), cause the apparatus (300) to obtain the certificate specific to the client device from a high-level configuration server at least in part in response to receiving the message from the client device.

8. The apparatus (300) according to any of claims 6-7, wherein the at least one memory (320) and the computer program code are configured to, with the at least one processing core (310), cause the apparatus (300) to receive (610) the message from the client device in accordance with the transport layer security, TLS, protocol.

9. A method comprising:
- initiating (510) communications toward a configuration server based on a resource locator of the configuration server, the resource locator comprising an identifier of an apparatus performing the method;
- receiving (520) from the configuration server authentication information based on a cryptographic certificate specific to the apparatus and receiving from the configuration server a private key associated with the cryptographic certificate, and
- responsive to the certificate specific to the apparatus being validated by the apparatus, and an authentication of the configuration server based on it, receiving (530) configuration data from the configuration server, the validation comprising checking that the identifier of the apparatus is embedded in the cryptographic certificate and that a cryptographic signature of the cryptographic certificate is correct.

10. The method according to claim 9, further comprising obtaining at least part of the resource locator of the configuration server from a dynamic host configuration server by querying the dynamic host configuration server.

11. A method, comprising:
- receiving (610) a message from a client device, addressed to an apparatus performing the method based on a resource locator of the apparatus, and
- responding (620) toward the client device by transmitting to the client device a cryptographic certificate specific to the client device, and
**characterized in that**
- the resource locator comprises an identifier of the client device, **in that** the responding comprises transmitting to the client device a private key associated with the cryptographic certificate, the identifier of the client device being embedded in said cryptographic certificate, and **in that** the method comprises providing (630) configuration data to the client device.

12. A non-transitory computer readable medium having stored thereon a set of computer readable instructions that, when executed by at least one processor, cause an apparatus to at least perform either the following:
- initiate (510) communications toward a configuration server based on a resource locator of the configuration server, the resource locator comprising an identifier of an apparatus executing the computer readable instructions, and
- receive (520) from the configuration server authentication information based on a cryptographic certificate specific to the apparatus and receive from the configuration server a private key associated with the cryptographic certificate, and
- responsive to the certificate specific to the apparatus being validated by the apparatus, and an authentication of the configuration server based on it, receive (530) configuration data from the configuration server, the validation comprising checking that the identifier of the apparatus is embedded in the cryptographic certificate and that a cryptographic signature of the cryptographic certificate is correct,
or the following:
- receive (610) a message from a client device, addressed to an apparatus executing the computer readable instructions based on a resource locator of the apparatus, the resource locator comprising an identifier of the client device, and
- respond (620) toward the client device by transmitting to the client device a cryptographic certificate specific to the client device and by transmitting to the client device a private key associated with the cryptographic certificate, the identifier of the client device being embedded in said cryptographic certificate, and
- provide (630) configuration data to the client device.

13. A computer program configured to cause a method in accordance with at least one of claims 9 - 11 to be performed.

## Patentansprüche

1. Einrichtung (300), die mindestens einen Verarbeitungskern (310), mindestens einen Speicher (320), der einen Computerprogrammcode beinhaltet, umfasst, wobei der mindestens eine Speicher (320) und der Computerprogrammcode dazu ausgelegt sind, die Einrichtung (300) mit dem mindestens einen Verarbeitungskern (310) mindestens zu Folgendem zu veranlassen:
- Initiieren (510) einer Kommunikation zu einem Auslegungsserver auf Basis eines Ressourcenlokalisierers des Auslegungsservers, wobei der Ressourcenlokalisierer eine Kennung der Einrichtung umfasst;
- Empfangen (520) von Authentifizierungsinformationen auf Basis eines speziell auf die Einrichtung bezogenen kryptographischen Zertifikats vom Auslegungsserver und Empfangen eines privaten Schlüssels, der mit dem kryptographischen Zertifikat verknüpft ist, vom Auslegungsserver, und
- in Reaktion darauf, dass das speziell auf die Einrichtung bezogene Zertifikat von der Einrichtung validiert wird, und auf einer darauf basierenden Authentifizierung des Auslegungsservers Empfangen (530) von Auslegungsdaten vom Auslegungsserver, wobei die Validierung das Prüfen, dass die Kennung der Einrichtung in das kryptographische Zertifikat eingebettet ist und dass eine kryptographische Signatur des kryptographischen Zertifikat korrekt ist, umfasst.

2. Einrichtung (300) nach Anspruch 1, wobei der mindestens eine Speicher (320) und der Computerprogrammcode ferner dazu ausgelegt sind, die Einrichtung (300) mit dem mindestens einen Verarbeitungskern (310) zu veranlassen, durch Abfragen eines dynamischen Hostauslegungsservers mindestens einen Teil des Ressourcenlokalisierers des Auslegungsservers vom dynamischen Hostauslegungsserver zu erhalten.

3. Einrichtung (300) nach einem der Ansprüche 1 bis 2, wobei der Ressourcenlokalisierer des Auslegungsservers ein universeller Ressourcenlokalisierer ist und die Kennung der Einrichtung in einem voll qualifizierten Domänennamensteil des universellen Ressourcenlokalisierers des Auslegungsservers umfasst ist.

4. Einrichtung (300) nach einem der Ansprüche 1 bis 3, wobei der mindestens eine Speicher und der Computerprogrammcode dazu ausgelegt sind, mit dem mindestens einen Verarbeitungskern die Einrichtung (300) zu veranlassen, das speziell auf die Einrichtung bezogene Zertifikat mit Bezug auf einen in der Einrichtung (300) gespeicherten Vertrauensanker zu validieren.

5. Einrichtung (300) nach einem der Ansprüche 1 bis 4, wobei der mindestens eine Speicher (320) und der Computerprogrammcode dazu ausgelegt sind, mit dem mindestens einen Verarbeitungskern (310) die Einrichtung (300) zu veranlassen, die Kommunikation zum Auslegungsserver gemäß einem Transportschichtsicherheits(TLS)-Protokoll zu initiieren (510).

6. Einrichtung (300), die mindestens einen Verarbeitungskern, mindestens einen Speicher (320), der einen Computerprogrammcode beinhaltet, umfasst, wobei der mindestens eine Speicher (320) und der Computerprogrammcode dazu ausgelegt sind, die Einrichtung (300) mit dem mindestens einen Verarbeitungskern (310) mindestens zu Folgendem zu veranlassen:
- Empfangen (610) einer Nachricht von einer Clientvorrichtung, die an die Einrichtung adressiert ist, auf Basis eines Ressourcenlokalisierers der Einrichtung, und
- Antworten (620) der Clientvorrichtung durch Übertragen eines speziell auf die Clientvorrichtung bezogenen kryptographischen Zertifikats zur Clientvorrichtung,
**dadurch gekennzeichnet, dass**
- der Ressourcenlokalisierer eine Kennung der Clientvorrichtung umfasst, dadurch, dass das Antworten das Übertragen eines privaten Schlüssels, der mit dem kryptographischen Zertifikat verknüpft ist, an die Clientvorrichtung umfasst, wobei die Kennung der Clientvorrichtung in das kryptographische Zertifikat eingebettet ist, und dadurch, dass die Einrichtung dazu ausgelegt ist, der Clientvorrichtung Auslegungsdaten bereitzustellen (630).

7. Einrichtung (300) nach Anspruch 6, wobei der mindestens eine Speicher (320) und der Computerprogrammcode ferner dazu ausgelegt sind, die Einrichtung (300) mit dem mindestens einen Verarbeitungskern (310) zu veranlassen, in Reaktion auf das Empfangen der Nachricht von der Clientvorrichtung das speziell auf die Clientvorrichtung bezogene Zertifikat von einem Auslegungsserver einer hohen Schicht mindestens teilweise zu erhalten.

8. Einrichtung (300) nach einem der Ansprüche 6 bis 7, wobei der mindestens eine Speicher (320) und der Computerprogrammcode dazu ausgelegt sind, mit dem mindestens einen Verarbeitungskern (310) die Einrichtung (300) zu veranlassen, die Nachricht gemäß dem Transportschichtsicherheits(TLS) Protokoll von der Clientvorrichtung zu empfangen (610).

9. Verfahren, das Folgendes umfasst:
- Initiieren (510) einer Kommunikation zu einem Auslegungsserver auf Basis eines Ressourcenlokalisierers des Auslegungsservers, wobei der Ressourcenlokalisierer eine Kennung der Einrichtung umfasst, die das Verfahren durchführt;
- Empfangen (520) von Authentifizierungsinformationen auf Basis eines speziell auf die Einrichtung bezogenen kryptographischen Zertifikats vom Auslegungsserver und Empfangen eines privaten Schlüssels, der mit dem kryptographischen Zertifikat verknüpft ist, vom Auslegungsserver, und
- in Reaktion darauf, dass das speziell auf die Einrichtung bezogene Zertifikat von der Einrichtung validiert wird, und auf einer darauf basierenden Authentifizierung des Auslegungsservers Empfangen (530) von Auslegungsdaten vom Auslegungsserver, wobei die Validierung das Prüfen, dass die Kennung der Einrichtung in das kryptographische Zertifikat eingebettet ist und dass eine kryptographische Signatur des kryptographischen Zertifikat korrekt ist, umfasst.

10. Verfahren nach Anspruch 9, das ferner das mindestens teilweise Erhalten des Ressourcenlokalisierers des Auslegungsservers von einem dynamischen Hostauslegungsserver durch Abfragen des dynamischen Hostauslegungsservers umfasst.

11. Verfahren, das Folgendes umfasst:
- Empfangen (610) einer Nachricht von einer Clientvorrichtung, die an eine Einrichtung adressiert ist, die das Verfahren durchführt, auf Basis eines Ressourcenlokalisierers der Einrichtung, und
- Antworten (620) der Clientvorrichtung durch Übertragen eines speziell auf die Clientvorrichtung bezogenen kryptographischen Zertifikats zur Clientvorrichtung, und **dadurch gekennzeichnet, dass**
- der Ressourcenlokalisierer eine Kennung der Clientvorrichtung umfasst, dadurch, dass das Antworten das Übertragen eines privaten Schlüssels, der mit dem kryptographischen Zertifikat verknüpft ist, an die Clientvorrichtung umfasst, wobei die Kennung der Clientvorrichtung in das kryptographischen Zertifikat eingebettet ist, und dadurch, dass das Verfahren das Bereitstellen (630) von Auslegungsdaten für die Clientvorrichtung umfasst.

12. Nichttransitorisches computerlesbares Medium, auf dem ein Satz von computerlesbaren Anweisungen gespeichert ist, die, wenn sie von mindestens einem Prozessor ausgeführt werden, eine Einrichtung zu veranlassen, mindestens Folgendes durchzuführen:
- Initiieren (510) einer Kommunikation zu einem Auslegungsserver auf Basis eines Ressourcenlokalisierers des Auslegungsservers, wobei der Ressourcenlokalisierer eine Kennung einer Einrichtung umfasst, die die computerlesbaren Anweisungen ausführt, und
- Empfangen (520) von Authentifizierungsinformationen auf Basis eines speziell auf die Einrichtung bezogenen kryptographischen Zertifikats vom Auslegungsserver und Empfangen eines privaten Schlüssels, der mit dem kryptographischen Zertifikat verknüpft ist, vom Auslegungsserver, und
- in Reaktion darauf, dass das speziell auf die Einrichtung bezogene Zertifikat von der Einrichtung validiert wird, und auf einer darauf basierenden Authentifizierung des Auslegungsservers Empfangen (530) von Auslegungsdaten vom Auslegungsserver, wobei die Validierung das Prüfen, dass die Kennung der Einrichtung in das kryptographische Zertifikat eingebettet ist und dass eine kryptographische Signatur des kryptographischen Zertifikat korrekt ist, umfasst,
oder Folgendes:
- Empfangen (610) einer Nachricht von einer Clientvorrichtung, die an eine Einrichtung adressiert ist, die die computerlesbaren Anweisungen auf Basis eines Ressourcenlokalisierers der Einrichtung ausführt, wobei der Ressourcenlokalisierer eine Kennung der Clientvorrichtung umfasst, und
- Antworten (620) der Clientvorrichtung durch Übertragen eines speziell auf die Clientvorrichtung bezogenen kryptographischen Zertifikats zur Clientvorrichtung und durch Übertragen eines privaten Schlüssels, der mit dem kryptographischen Zertifikat verknüpft ist, zur Clientvorrichtung, wobei die Kennung der Clientvorrichtung in das kryptographische Zertifikat eingebettet ist, und
- Bereitstellen (630) von Auslegungsdaten für die Clientvorrichtung.

13. Computerprogramm, das dazu ausgelegt ist zu veranlassen, dass ein Verfahren gemäß mindestens einem der Ansprüche 9 bis 11 durchgeführt wird.

## Revendications

1. Appareil (300) comprenant au moins un noyau de traitement (310), au moins une mémoire (320) comportant un code de programme informatique, l'au moins une mémoire (320) et le code de programme informatique étant configurés pour, avec l'au moins un noyau de traitement (310), amener l'appareil (300) à au moins :
- initier (510) des communications vers un serveur de configuration sur la base d'un localisateur de ressources du serveur de configuration, le localisateur de ressources comprenant un identifiant de l'appareil ;
- recevoir (520) du serveur de configuration des informations d'authentification sur la base d'un certificat cryptographique spécifique à l'appareil, et recevoir du serveur de configuration une clé privée associée au certificat cryptographique, et
- en réponse à la validation du certificat spécifique à l'appareil par l'appareil et à une authentification du serveur de configuration basée sur celui-ci, recevoir (530) des données de configuration du serveur de configuration, la validation comprenant la vérification du fait que l'identifiant de l'appareil est intégré dans le certificat cryptographique et qu'une signature cryptographique du certificat cryptographique est correcte.

2. Appareil (300) selon la revendication 1, dans lequel l'au moins une mémoire (320) et le code de programme informatique sont en outre configurés pour, avec l'au moins un noyau de traitement (310), amener l'appareil (300) à obtenir au moins une partie du localisateur de ressources du serveur de configuration à partir d'un serveur de configuration d'hôte dynamique en interrogeant le serveur de configuration d'hôte dynamique.

3. Appareil (300) selon l'une des revendications 1 et 2, dans lequel le localisateur de ressources du serveur de configuration est un localisateur de ressources universel, et l'identifiant de l'appareil est compris dans une partie de nom de domaine entièrement qualifié du localisateur de ressources universel du serveur de configuration.

4. Appareil (300) selon l'une des revendications 1 à 3, dans lequel l'au moins une mémoire et le code de programme informatique sont configurés pour, avec l'au moins un noyau de traitement, amener l'appareil (300) à valider le certificat spécifique à l'appareil en référence à une ancre de confiance stockée dans l'appareil (300).

5. Appareil (300) selon l'une des revendications 1 à 4, dans lequel l'au moins une mémoire (320) et le code de programme informatique sont configurés pour, avec l'au moins un noyau de traitement (310), amener l'appareil (300) à initier (510) les communications vers le serveur de configuration conformément à un protocole de sécurité de couche de transport, TLS.

6. Appareil (300) comprenant au moins un noyau de traitement, au moins une mémoire (320) comportant code de programme informatique, l'au moins une mémoire (320) et le code de programme informatique étant configurés pour, avec l'au moins un noyau de traitement (310), amener l'appareil (300) à au moins :
- recevoir (610) d'un dispositif client un message adressé à l'appareil sur la base d'un localisateur de ressources de l'appareil, et
- répondre (620) au dispositif client en transmettant au dispositif client un certificat cryptographique spécifique au dispositif client,
**caractérisé en ce que**
- le localisateur de ressources comprend un identifiant du dispositif client, **en ce que** la réponse comprend la transmission au dispositif client d'une clé privée associée au certificat cryptographique, l'identifiant du dispositif client étant intégré dans ledit certificat cryptographique, et **en ce que** l'appareil est configuré pour fournir (630) des données de configuration au dispositif client.

7. Appareil (300) selon la revendication 6, dans lequel l'au moins une mémoire (320) et le code de programme informatique sont en outre configurés pour, avec l'au moins un noyau de traitement (310), amener l'appareil (300) à obtenir le certificat spécifique au dispositif client à partir d'un serveur de configuration de haut niveau, au moins en partie en réponse à la réception du message du dispositif client.

8. Appareil (300) selon l'une des revendications 6 et 7, dans lequel l'au moins une mémoire (320) et le code de programme informatique sont configurés pour, avec l'au moins un noyau de traitement (310), amener l'appareil (300) à recevoir (610) le message du dispositif client conformément au protocole de sécurité de couche de transport, TLS.

9. Procédé comprenant :
- l'initiation (510) des communications vers un serveur de configuration sur la base d'un localisateur de ressources du serveur de configuration, le localisateur de ressources comprenant un identifiant d'un appareil réalisant le procédé ;
- la réception (520), du serveur de configuration, d'informations d'authentification sur la base d'un certificat cryptographique spécifique à l'appareil et la réception, du serveur de configuration, d'une clé privée associée au certificat cryptographique, et
- en réponse à la validation du certificat spécifique à l'appareil par l'appareil et à une authentification du serveur de configuration basée sur celui-ci, la réception (530) de données de configuration du serveur de configuration, la validation comprenant la vérification du fait que l'identifiant de l'appareil est intégré dans le certificat cryptographique et qu'une signature cryptographique du certificat cryptographique est correcte.

10. Procédé selon la revendication 9, comprenant en outre l'obtention d'au moins une partie du localisateur de ressources du serveur de configuration à partir d'un serveur de configuration d'hôte dynamique en interrogeant le serveur de configuration d'hôte dynamique.

11. Procédé, comprenant :
- la réception (610) d'un dispositif client, d'un message adressé à un appareil réalisant le procédé sur la base d'un localisateur de ressources de l'appareil, et
- la réponse (620) au dispositif client en transmettant au dispositif client un certificat cryptographique spécifique au dispositif client, et
**caractérisé en ce que**
- le localisateur de ressources comprend un identifiant du dispositif client, **en ce que** la réponse comprend la transmission au dispositif client d'une clé privée associée au certificat cryptographique, l'identifiant du dispositif client étant intégré dans ledit certificat cryptographique, et **en ce que** le procédé comprend la fourniture (630) de données de configuration au dispositif client.

12. Support non transitoire lisible par ordinateur sur lequel est stocké un ensemble d'instructions lisibles par ordinateur qui, lorsqu'elles sont exécutées par au moins un processeur, amènent un appareil à réaliser au moins l'une des opérations suivantes : :
- initier (510) des communications vers un serveur de configuration sur la base d'un localisateur de ressources du serveur de configuration, le localisateur de ressources comprenant un identifiant d'un appareil exécutant les instructions lisibles par ordinateur, et
- recevoir (520), du serveur de configuration, des informations d'authentification sur la base d'un certificat cryptographique spécifique à l'appareil et recevoir, du serveur de configuration, une clé privée associée au certificat cryptographique, et
- en réponse à la validation du certificat spécifique à l'appareil par l'appareil et à une authentification du serveur de configuration basée sur celui-ci, recevoir (530) données de configuration du serveur de configuration, la validation comprenant la vérification du fait que l'identifiant de l'appareil est intégré dans le certificat cryptographique et qu'une signature cryptographique du certificat cryptographique est correcte, ou les opérations suivantes :
- recevoir (610), d'un dispositif client, un message adressé à un appareil exécutant les instructions lisibles par ordinateur sur la base d'un localisateur de ressources de l'appareil, le localisateur de ressources comprenant un identifiant du dispositif client, et
- répondre (620) au dispositif client en transmettant au dispositif client un certificat cryptographique spécifique au dispositif client et en transmettant au dispositif client une clé privée associée au certificat cryptographique, l'identifiant du dispositif client étant intégré dans ledit certificat cryptographique, et
- fournir (630) des données de configuration au dispositif client.

13. Programme informatique configuré pour provoquer la réalisation d'un procédé conformément à au moins l'une des revendications 9 à 11.
